# EUROPEAN PATENT SPECIFICATION

(11) **EP 4 199 222 B1**
(45) Date of publication and mention of the grant of the patent: **25.09.2024**
(21) Application number: 21306841.4
(22) Date of filing: 17.12.2021
(51) Int. Cl.: H01M 50/30, H01M 50/383, H01M 50/367, H01M 50/308, H01M 50/325

(54) **BATTERY AND SAFETY ARRANGEMENT**
BATTERIE UND SICHERHEITSANORDNUNG
BATTERIE ET AGENCEMENT DE SÉCURITÉ

(43) Date of publication of application: 21.06.2023
(73) Proprietor: EnerSys Delaware Inc., Reading, PA 19605 (US)
(72) Inventor: KHAMMASSI, Montassar, 62033 Arras Cedex (FR); EVANS, Rhodri, Newport, NP19 4XH (GB)
(74) Representative: Abel & Imray LLP

(56) References cited:
- EP-A1- 3 269 540
- WO-A1-2020/019570
- WO-A1-2021/022130
- DE-A1- 102021 000 029
- GB-A- 2 158 634
- US-A1- 2021 074 960

## Description

### Field of the Invention

The present invention concerns a fire safety arrangement for a battery. More particularly, but not exclusively, this invention concerns a fire safety arrangement for a metal ion battery, for example a lithium ion battery.

### Background of the Invention

Metal ion batteries, for example, lithium ion batteries may be vulnerable to fires as a result of thermal runaway. Thermal runaway may occur when a fault within a battery causes an exothermic reaction, with the reaction rate increasing as temperature increases, to a point where the battery is increasing in temperature at a greater rate than the battery loses heat to its surroundings. The battery temperature will continue to rise, thereby causing the exothermic reaction rate to also increase. As thermal runaway occurs, gases are produced, and usually vented to the surroundings of the battery to prevent pressure increasing within the battery to a point where the battery casing ruptures. The gases may be flammable, for example methane, or ethylene dihydrogen. The decomposition of the battery during thermal runaway may also produce sparks, which can exit the battery via the same route as the gases, which may cause ignition of the gases, resulting in a fire and/or explosion

The present invention seeks to mitigate the above-mentioned problems. Alternatively or additionally, the present invention seeks to provide an improved battery safety arrangement.

### Summary of the Invention

The present invention provides, according to a first aspect, a metal ion battery cell comprising a plurality of electrodes and an electrolyte encased within a housing, the housing comprising a safety valve or vent configured to allow gas build up within the housing to vent outside the housing, and a fabric band surrounding the housing, multiple times wherein the fabric band covers the safety valve or vent, such that gas may pass through the fabric band, but sparks are contained by the fabric band.

The fabric band prevents sparks generated by the battery cell during a thermal runaway, which pass through the safety valve, from igniting gases which may be proximate to the battery cell. Therefore, the chances of the gases igniting are reduced or eliminated.

The metal ion battery may be a lithium ion battery cell. The lithium ion battery cell may be a prismatic lithium ion battery cell. The lithium ion battery cell may be a cylindrical lithium ion battery cell.

The lithium ion battery cell may be a pouch lithium ion battery cell. The metal ion battery may be a sodium ion battery cell, a potassium ion battery cell, an aluminium ion battery cell, or a magnesium ion battery cell.

The fabric band surrounds, or is wrapped around, the housing a multiple number of times, for example, 2 to 5 windings around the housing. Such an arrangement may allow a thin and flexible fabric to be used as the fabric band, whilst still providing the necessary spark suppression due to the increased thickness of multiple layers covering the safety valve. There may be a plurality of fabric bands wrapped around the housing in order to create a number of windings around the housing. Alternatively or additionally, a single band may be wrapped around the housing a number of times. The skilled person will appreciate that the thickness and the density of the fabric band may be varied in order to provide the required gas permeability and spark arresting characteristics, for example increasing the density of the fabric band may allow a decrease in the thickness of the fabric band, and vice versa. Such variation comprises routine experimentation, and allows the skilled person to easily adapt the fabric band to meet specific use requirements.

The fabric band may be elastic, for example due to the weave of a fibre making up the fabric band. The fabric band may stretch if the housing it surrounds increases in size, which may happen during a thermal runaway. Whilst a limited amount of stretch may be allowed, the fabric band may be arranged such that beyond a stretch limit, the band resists the expansion of the housing it surrounds, potentially supporting the structural integrity of the housing.

The fabric band may comprise a heat resistant material, for example being heat resistant up to 1200 degrees Celsius. The heat resistance will prevent the increased temperature of a battery cell during a thermal runaway event from damaging, for example igniting, the fabric band, and will ensure that the fabric band is still able to arrest sparks during the thermal runaway event. The fabric band may comprise a felt material needled to or between one or more woven fabrics, for example a woven glass or silica fabric. The felt material may be manufactured by matting, condensing, and/or pressing fibres together. The felt material may be a non-woven material.

The fabric band may be combined with a separate felt filter, the felt filter positioned to cover the safety valve or vent. The fabric band may secure the felt filter in position with respect to the safety valve or vent. The combination of the fabric band and separate felt filter may improve the spark arresting ability of the fabric band, for example by the felt material partially or fully absorbing a spark before the spark reaches the fabric band. The fabric band may be combined with a plurality of separate felt filters, for example with the fabric band being wrapped around the battery housing a plurality of times, with a felt filter being placed covering the safety valve or vent each winding of the fabric.

The felt filter may comprise a mineral wool, for example an alkaline earth silicate wool, alumino silicate wool, polycrystalline wool, or Kaowool <RTM>. The felt filter may comprise organic binders. The felt may be manufactured by matting, condensing, and/or pressing fibres together. The felt may be a non-woven material. The felt filter may be flexible and/or resiliently deformable. The felt filter may be relatively rigid compared to fabric materials. The felt filter may be heat resistant, for example up to 1260 degrees Celsius. The heat resistance will prevent the increased temperature of a battery cell during a thermal runaway event from damaging, for example igniting, the felt filter, and will ensure that the felt filter is still able to arrest sparks during the thermal runaway event.

The felt filter may have a thickness of between 1mm to 50mm. The felt filter may have a density chosen to allow gas to flow through at a rate which prevents backpressure at the safety valve or vent. The felt filter may have a density chosen to prevent sparks from passing through the felt filter. The felt filter may be easy to cut and shape, to allow easy application to the metal ion battery cell.

The safety valve may be a one way valve arranged to open at 0.9MPa, or 0.9MPa ±0.2MPa pressure within the lithium ion battery cell, or any other opening pressure as conventionally used for safety valves for metal ion battery cells. The safety vent may provide an aperture though which excess gases may pass at atmospheric pressure.

According to a second aspect, the invention comprises a plurality of metal ion battery cells, each metal ion battery cell comprising a plurality of electrodes and an electrolyte encased within a housing, the housing comprising a safety valve or vent configured to allow gas build up within the housing to vent outside the housing of the first aspect of the invention, the plurality of metal ion battery cells arranged to form a cell stack, and a fabric band surrounding the cell stack to cover a plurality of safety valves or vents such that gas may pass through the fabric band, but sparks are contained by the fabric band, wherein the the fabric band surrounds the cell stack a multiple number of times. For example, the invention may comprise four lithium ion battery cells linked in series and forming a cell stack. The plurality of lithium ion battery cells may be arranged such that the safety valves or vents are linearly aligned, such that a fabric band extends in a linear fashion so as to cover a plurality of safety valves. The plurality of metal ion battery cells may comprise a power module. The plurality of metal ion cells may comprise a battery pack. The battery pack may comprise one or more power modules.

According to a third aspect, the invention comprises a power module, the power module comprising a plurality of metal ion battery cells, the plurality of metal ion battery cells encased within a housing, the housing comprising a safety valve or vent configured to allow gas build up within the housing to vent outside the outing, and a fabric band surrounding the housing, wherein the fabric band covers the safety valve or vent such that gas may pass through the fabric band, but sparks are contained by the fabric band, wherein the fabric band surrounds the power module a multiple number of times.

According to a fourth aspect, the invention comprises a battery pack, the battery pack comprising one or more power modules, each power module comprising a plurality of metal ion battery cells, the one or more power modules encased within a housing, the housing comprising a safety valve or vent configured to allow gas build up within the housing to vent outside the housing, and a fabric band surrounding the housing, wherein the fabric band covers the safety valve or vent such that gas may pass through the fabric band, but sparks are contained by the fabric band wherein the fabric band surrounds the cell stack a multiple number of times.

According to a fifth aspect of the invention there is also provided a method of manufacturing a metal ion battery cell according to the first aspect of the invention, the method comprising the steps of: applying a fabric band to a metal ion battery cell, such that a safety valve or vent on the metal ion battery cell is covered by the fabric filter and the fabric band surrounds the housing a multiple number of times.

It will of course be appreciated that features described in relation to one aspect of the present invention may be incorporated into other aspects of the present invention. For example, the method of the invention may incorporate any of the features described with reference to the apparatus of the invention and *vice versa.* As another example, any features described with reference to the first aspect of the invention may be incorporated into the second, third, fourth, or fifth aspects of the invention, and vice versa.

### Description of the Drawings

Embodiments of the present invention will now be described by way of example only with reference to the accompanying schematic drawings of which:
- Figure 1: shows a schematic cross-sectional view of a cell according to the prior art;
- Figure 2: shows a schematic cross sectional view of the cell of figure 1 where a fire has started;
- Figure 3: shows a schematic cross-sectional view of a cell according to a first embodiment of the invention,
- Figure 4: shows a schematic view of a cell stack according to a second embodiment of the invention;
- Figure 5: shows a schematic cross-sectional view of a fabric band according to a third embodiment of the invention, and
- Figure 6: shows a flow chart of a method according to a fourth embodiment of the invention.

### Detailed Description

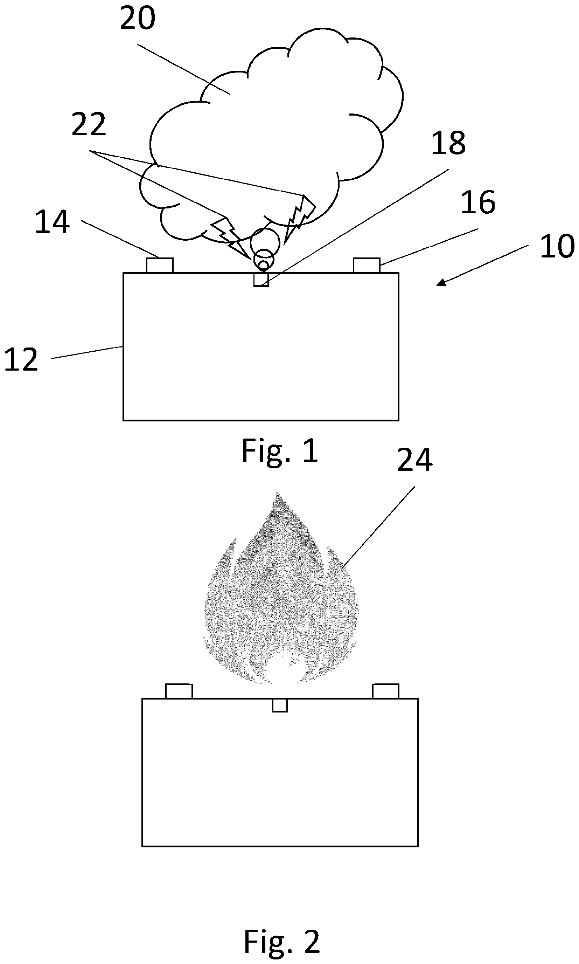

Figure 1 shows a cross-sectional view of a metal ion battery cell, in this case a lithium ion prismatic cell 10. The cell comprises a plurality of electrodes and an electrolyte within a housing 12. Terminal connections 14 and 16 extend from the housing 12. A safety valve 18 is located on a top cover of the housing 12, and is arranged to vent gas from the housing 12 when the pressure reaches a threshold value to prevent undue pressure build up within the housing. A fault may increase the temperature within the cell 10, leading to a flammable gas being generated by the electrodes and electrolyte, which is vented through the safety valve 18 into an area proximate to the cell 10. This is shown by the cloud 20 shown in figure 1. As the temperature of the cell 10 rises, the exothermic reaction also increases, leading to further temperature rises. At some point, the temperature will rise to a level at which sparks 22 are generated within the cell 10 and pass through the safety valve. The sparks 22 may ignite the gas 20, leading to a fire 24 as shown in figure 2.

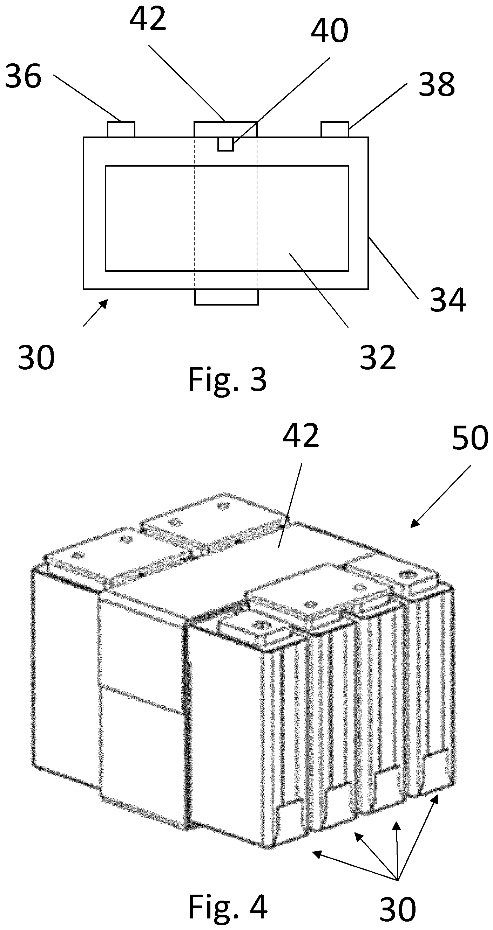

Figure 3 shows a schematic cross-sectional view of a lithium ion prismatic cell 30. The cell comprises a plurality of electrodes and an electrolyte 32 within a housing 34. Terminal connections 36 and 38 extend from the housing. A safety valve 40 is located on the top cover of the housing 34. , and is arranged to vent gas from the housing 34 when the pressure reaches a threshold value. The cell 30 further comprises a fabric band 42 which surrounds the housing 34 and runs across the top cover of the housing 34, covering the safety valve 40. The dashed lines show how the band surrounds the housing 34, along with running along the bottom cover of the housing 34. The fabric band is a low silica felt needled between two silica fabrics, and is porous enough to all gas to pass through into the surroundings of the cell 30, and also dense enough to absorb any sparks that are generated by the cell and travel out through the safety valve 40. If a fault occurs which results in a flammable gas being generated, the flammable gas will pass through the safety valve 40 once the safety pressure within the cell has been reached, and disperse into the environment surrounding the battery cell 30. Any sparks that are generated and pass through the safety valve 40 will be absorbed by the felt band 42, reducing or eliminating the risk of the sparks igniting the flammable gas surrounding the cell 30.

Figure 4 shows lithium ion cell stack 50 made up of four lithium ion cells as described with reference to figure 3. The cell stack 50 may also be referred to as a battery module. A fabric band 42 surrounds the cells 30 and extends across the top of the cell stack, such that each of the safety valves 40 of the four lithium ion cells 30 is covered. Applying a single fabric band 42 which covers each of the safety valves 40 is potentially time saving compared to applying individual foam strips to each of the cells 30. As can be seen in the figure, the fabric band is wrapped around the cell stack a number of times, with each wrap increasing the spark arresting ability of the fabric band. However, the skilled person will appreciate that the fabric band is carefully chosen not to create any significant back pressure at the safety valve, and gas should pass through the layers of fabric band relatively easily.

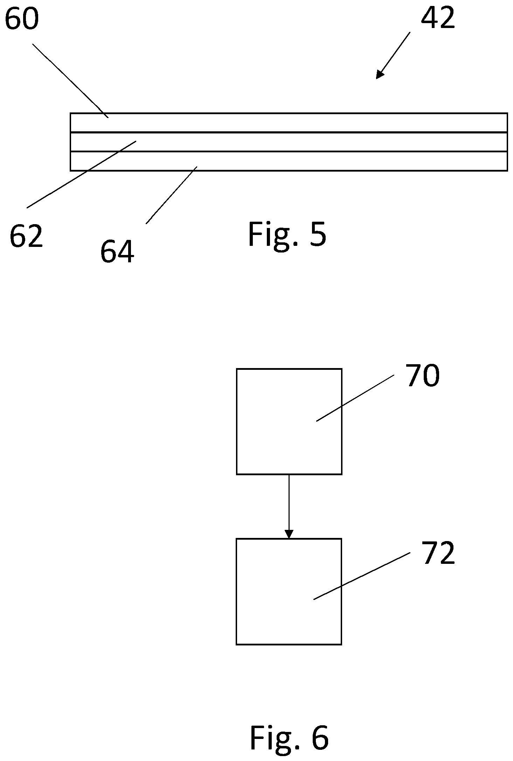

Figure 5 shows a schematic cross-sectional view of a fabric band 42. The fabric band 42 comprises a first silica fabric layer 60, and low-silica felt material, 62 and a second silica fabric layer 64. The low-silica felt material 62 is needled to the first silica fabric layer 60 and the second silica fabric layer 64.

Figure 6 shows the method steps for manufacturing a cell 30 according to the first embodiment of the invention. In step 70 a fabric band 42 is wrapped around a lithium ion battery cell 30. In step 72 the fabric band 42 is located such that the safety valve 40 on top of the cell 30 is covered.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The lithium ion battery cell may be a cylindrical cell. The lithium ion battery cell may be a pouch cell. The invention may be applied to various other metal ion battery cells, in particular metal ion battery cells that potentially generate flammable gases.

In an alternative arrangement, the fabric band may be applied to cover a safety vent. The fabric band may be combined with a felt filter, for example the fabric band may secure a felt filter in a position covering the safety valve or vent in order to further provide spark arresting characteristics.

The fabric band may be applied to cover a safety valve or vent in a housing of a power module, the power module comprising a plurality of metal ion battery cells. The fabric band may be applied to cover a safety valve or vent in a housing of a battery pack, the battery pack comprising a plurality of metal ion battery cells. The battery pack may comprise one or more power modules, each power module comprising a plurality of metal ion battery cells.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A metal ion battery cell (30) comprising a plurality of electrodes and an electrolyte (32) encased within a housing (34), the housing comprising a safety valve or vent (40) configured to allow gas build up within the housing to vent outside the housing, and a fabric band (42) surrounding the housing, wherein the fabric band covers the safety valve or vent (40), such that gas may pass through the fabric band (42), but sparks are contained by the fabric band (42), **characterised in that** the fabric band (42) surrounds the housing (34) a multiple number of times.

2. A metal ion battery cell (30) as claimed in claim 1, comprising a lithium ion battery cell.

3. A metal ion battery cell (30) as claimed in claim 1, comprising a prismatic lithium ion battery cell.

4. A metal ion battery cell (30) as claimed in claim 1, comprising a cylindrical lithium ion battery cell.

5. A metal ion battery cell (30) as claimed in claim 1, comprising a pouch lithium ion battery cell.

6. A metal ion battery cell (30) as claimed in any preceding claim, wherein the fabric band is elastic.

7. A metal ion battery cell (30) as claimed in any preceding claim, wherein the fabric band (42) comprises a heat resistant material.

8. A metal ion battery cell (30) as claimed in any preceding claim, wherein the fabric band (42) comprises a felt material needled to or between one or more woven fabrics.

9. A metal ion battery cell (40) as claimed in any preceding claim, further comprising a felt filter covering the safety valve or vent.

10. A plurality of metal ion battery cells (40), each metal ion battery cell comprising a plurality of electrodes and an electrolyte encased within a housing, the housing comprising a safety valve configured to allow gas build up within the housing to vent outside the housing of the first aspect of the invention, the plurality of metal ion battery cells arranged to form a cell stack, and a fabric band surrounding the cell stack to cover a plurality of safety valves such that gas may pass through the fabric band, but sparks are contained by the fabric band, **characterised in that** the fabric band surrounds the cell stack a multiple number of times.

11. A method of manufacturing a metal ion battery cell (30) according to claim 1, the method comprising the steps of: applying a fabric band to a metal ion battery cell, such that a safety valve on the metal ion battery cell is covered by the fabric band.

12. A power module, the power module comprising a plurality of metal ion battery cells, the plurality of metal ion battery cells encased within a housing, the housing comprising a safety valve or vent configured to allow gas build up within the housing to vent outside the outing, and a fabric band surrounding the housing, wherein the fabric band covers the safety valve or vent such that gas may pass through the fabric band, but sparks are contained by the fabric band **characterised in that** the fabric band surrounds the power module a multiple number of times.

13. A battery pack, the battery pack comprising one or more power modules, each power module comprising a plurality of metal ion battery cells, the one or more power modules encased within a housing, the housing comprising a safety valve or vent configured to allow gas build up within the housing to vent outside the housing, and a fabric band surrounding the housing, wherein the fabric band covers the safety valve or vent such that gas may pass through the fabric band, but sparks are contained by the fabric band **characterised in that** the fabric band surrounds the power module a multiple number of times.

## Patentansprüche

1. Metall-Ionen-Batteriezelle (30), umfassend eine Mehrzahl von Elektroden und einen Elektrolyten (32), die von einem Gehäuse (34) umschlossen sind, wobei das Gehäuse ein Sicherheitsventil oder eine Sicherheitsentlüftung (40) umfasst, das/die so konfiguriert ist, dass innerhalb des Gehäuses angesammeltes Gas aus dem Gehäuse entweichen kann, sowie ein Gewebeband (42), das das Gehäuse umhüllt, wobei das Gewebeband das Sicherheitsventil oder die Sicherheitsentlüftung (40) abdeckt, so dass Gas durch das Gewebeband (42) hindurch strömen kann, Funken jedoch vom Gewebeband (42) zurückgehalten werden, **dadurch gekennzeichnet, dass** das Gewebeband (42) das Gehäuse (34) mehrfach umhüllt.

2. Metall-lonen-Batteriezelle (30) wie in Anspruch 1 beansprucht, umfassend eine Lithium-lonen-Batteriezelle.

3. Metall-Ionen-Batteriezelle (30) wie in Anspruch 1 beansprucht, umfassend eine prismatische Lithium-Ionen-Batteriezelle.

4. Metall-Ionen-Batteriezelle (30) wie in Anspruch 1 beansprucht, umfassend eine zylindrische Lithium-Ionen-Batteriezelle.

5. Metall-Ionen-Batteriezelle (30) wie in Anspruch 1 beansprucht, umfassend eine Pouch-Lithium-lonen-Batteriezelle.

6. Metall-Ionen-Batteriezelle (30) wie in einem vorhergehenden Anspruch beansprucht, wobei das Gewebeband elastisch ist.

7. Metall-Ionen-Batteriezelle (30) wie in einem vorhergehenden Anspruch beansprucht, wobei das Gewebeband (42) ein hitzebeständiges Material umfasst.

8. Metall-Ionen-Batteriezelle (30) wie in einem vorhergehenden Anspruch beansprucht, wobei das Gewebeband (42) ein Filzmaterial umfasst, das auf oder zwischen einem oder mehreren Geweben vernadelt ist.

9. Metall-Ionen-Batteriezelle (40) wie in einem vorhergehenden Anspruch beansprucht, ferner umfassend einen Filzfilter, der das Sicherheitsventil oder die Sicherheitsentlüftung abdeckt.

10. Mehrzahl von Metall-lonen-Batteriezellen (40), wobei jede Metall-Ionen-Batteriezelle eine Mehrzahl von Elektroden und einen Elektrolyten, die von einem Gehäuse umschlossen sind, umfasst, wobei das Gehäuse umfasst: ein Sicherheitsventil, das so konfiguriert ist, dass innerhalb des Gehäuses angesammeltes Gas aus dem Gehäuse des ersten Aspekts der Erfindung entweichen kann, wobei die mehreren Metall-lonen-Batteriezellen so angeordnet sind, dass sie einen Zellstapel bilden, und ein Gewebeband, das den Zellstapel so umhüllt, dass es eine Mehrzahl von Sicherheitsventilen abdeckt, so dass Gas durch das Gewebeband hindurch strömen kann, Funken jedoch vom Gewebeband zurückgehalten werden, **dadurch gekennzeichnet, dass** das Gewebeband den Zellstapel mehrfach umhüllt.

11. Verfahren zur Herstellung einer Metall-Ionen-Batteriezelle (30) gemäß Anspruch 1, wobei das Verfahren folgende Schritte umfasst: Anbringen eines Gewebebands an einer Metall-lonen-Batteriezelle, so dass ein Sicherheitsventil an der Metall-lonen-Batteriezelle vom Gewebeband abgedeckt wird.

12. Leistungsmodul, wobei das Leistungsmodul eine Mehrzahl von Metall-Ionen-Batteriezellen umfasst, wobei die mehreren Metall-lonen-Batteriezellen von einem Gehäuse umschlossen sind, wobei das Gehäuse ein Sicherheitsventil oder eine Sicherheitsentlüftung umfasst, das/die so konfiguriert ist, dass innerhalb des Gehäuses angesammeltes Gas aus dem Gehäuse entweichen kann, sowie ein Gewebeband, das das Gehäuse umhüllt, wobei das Gewebeband das Sicherheitsventil oder die Sicherheitsentlüftung abdeckt, so dass Gas durch das Gewebeband hindurch strömen kann, Funken jedoch vom Gewebeband zurückgehalten werden, **dadurch gekennzeichnet, dass** das Gewebeband das Leistungsmodul mehrfach umhüllt.

13. Batteriepack, wobei der Batteriepack ein oder mehrere Leistungsmodule umfasst, wobei jedes Leistungsmodul eine Mehrzahl von Metall-lonen-Batteriezellen umfasst, wobei die ein oder mehreren Leistungsmodule von einem Gehäuse umschlossen sind, wobei das Gehäuse ein Sicherheitsventil oder eine Sicherheitsentlüftung umfasst, das/die so konfiguriert ist, dass innerhalb des Gehäuses angesammeltes Gas aus dem Gehäuse entweichen kann, sowie ein Gewebeband, das das Gehäuse umhüllt, wobei das Gewebeband das Sicherheitsventil oder die Sicherheitsentlüftung abdeckt, so dass Gas durch das Gewebeband hindurch strömen kann, Funken jedoch vom Gewebeband zurückgehalten werden, **dadurch gekennzeichnet, dass** das Gewebeband das Leistungsmodul mehrfach umhüllt.

## Revendications

1. Cellule de batterie métal-ion (30) comprenant une pluralité d'électrodes et un électrolyte (32) enfermés à l'intérieur d'un boîtier (34), le boîtier comprenant une soupape de sécurité ou un évent (40) configuré(e) pour permettre à un gaz s'accumulant à l'intérieur du boîtier d'être ventilé à l'extérieur du boîtier, et une bande de tissu (42) entourant le boîtier, dans lequel la bande de tissu recouvre la soupape de sécurité ou l'évent (40), de telle sorte que du gaz peut passer à travers la bande de tissu (42), mais des étincelles sont contenues par la bande de tissu (42), **caractérisé en ce que** la bande de tissu (42) entoure le boîtier (34) un nombre de fois multiple.

2. Cellule de batterie métal-ion (30) selon la revendication 1, comprenant une cellule de batterie lithium-ion.

3. Cellule de batterie métal-ion (30) selon la revendication 1, comprenant une cellule de batterie lithium-ion prismatique.

4. Cellule de batterie métal-ion (30) selon la revendication 1, comprenant un cellule de batterie lithium-ion cylindrique.

5. Cellule de batterie métal-ion (30) selon la revendication 1, comprenant une cellule de poche de batterie lithium-ion.

6. Cellule de batterie métal-ion (30) selon l'une quelconque des revendications précédentes, dans laquelle la bande de tissu est élastique.

7. Cellule de batterie métal-ion (30) selon l'une quelconque des revendications précédentes, dans laquelle la bande de tissu (42) comprend un matériau résistant à la chaleur.

8. Cellule de batterie métal-ion (30) selon l'une quelconque des revendications précédentes, dans laquelle la bande de tissu (42) comprend un matériau en feutre aiguilleté sur ou entre un ou plusieurs tissus tissés.

9. Cellule de batterie métal-ion (40) selon l'une quelconque des revendications précédentes, comprenant en outre un filtre en feutre recouvrant la soupape de sécurité ou l'évent.

10. Pluralité de cellules de batterie métal-ion (40), chaque cellule de batterie métal-ion comprenant une pluralité d'électrodes et un électrolyte enfermés à l'intérieur d'un boîtier, le boîtier comprenant une soupape de sécurité configurée pour permettre à un gaz s'accumulant à l'intérieur du boîtier d'être ventilé à l'extérieur du boîtier du premier aspect de l'invention, la pluralité de cellules de batterie métal-ion étant agencée pour former un empilement de cellules, et une bande de tissu entourant l'empilement de cellules pour recouvrir une pluralité de soupapes de sécurité de telle sorte que du gaz puisse passer à travers la bande de tissu, mais des étincelles soient contenues par la bande de tissu, **caractérisée en ce que** la bande de tissu entoure l'empilement de cellules un nombre de fois multiple.

11. Procédé de fabrication d'une cellule de batterie métal-ion (30) selon la revendication 1, le procédé comprenant les étapes consistant à : appliquer une bande de tissu à une cellule de batterie métal-ion, de telle sorte qu'une soupape de sécurité sur la cellule de batterie métal-ion soit recouverte par la bande de tissu.

12. Module d'alimentation, le module d'alimentation comprenant une pluralité de cellules de batterie métal-ion, la pluralité de cellules de batterie métal-ion enfermée à l'intérieur d'un boîtier, le boîtier comprenant une soupape de sécurité ou un évent configuré(e) pour permettre à un gaz s'accumulant à l'intérieur du boîtier d'être ventilé à l'extérieur du boîtier, et une bande de tissu entourant le boîtier, dans lequel la bande de tissu recouvre la soupape de sécurité ou l'évent, de telle sorte que du gaz puisse passer à travers la bande de tissu, mais des étincelles soient contenues par la bande de tissu (42), **caractérisé en ce que** la bande de tissu entoure le module d'alimentation un nombre de fois multiple.

13. Bloc batterie, le bloc batterie comprenant un ou plusieurs modules d'alimentation, chaque module d'alimentation comprenant une pluralité de cellules de batterie métal-ion, les un ou plusieurs modules d'alimentation enfermés à l'intérieur d'un boîtier, le boîtier comprenant une soupape de sécurité ou un évent configuré(e) pour permettre à un gaz s'accumulant à l'intérieur du boîtier d'être ventilé à l'extérieur du boîtier, et une bande de tissu entourant le boîtier, dans lequel la bande de tissu recouvre la soupape de sécurité ou l'évent, de sorte que du gaz puisse passer à travers la bande de tissu, mais des étincelles soient contenues par la bande de tissu (42), **caractérisé en ce que** la bande de tissu entoure le module d'alimentation un nombre de fois multiple.
